# EUROPEAN PATENT SPECIFICATION

(11) **EP 3 708 393 B1**
(45) Date of publication and mention of the grant of the patent: **12.07.2023**
(21) Application number: 18872785.3
(22) Date of filing: 31.10.2018
(51) Int. Cl.: B60H 1/00

(54) **AIR CONDITIONING DEVICE FOR VEHICLES**
KLIMATISIERUNGSVORRICHTUNG FÜR FAHRZEUGE
DISPOSITIF DE CLIMATISATION POUR VÉHICULES

(30) Priority: 06.11.2017 JP 2017213537
(43) Date of publication of application: 16.09.2020
(73) Proprietor: Valeo Japan Co., Ltd., Saitama 360-0193 (JP)
(72) Inventor: NAGANO, Hideki, Kumagaya-shi Saitama 360-0193 (JP)
(74) Representative: Valeo Systèmes Thermiques
(86) International application number: PCT/JP2018/040424
(87) International publication number: WO 2019/088138

(56) References cited:
- WO-A1-2008/013375
- JP-A- H10 250 347
- JP-A- 2001 105 840
- JP-A- 2009 179 200
- JP-A- 2011 020 517
- JP-B2- 4 596 046
- US-B1- 6 351 961

## Description

### Technical Field

The present invention relates to an air conditioning device for a vehicle, and particularly relates to an air conditioning device for a vehicle equipped with a sliding door that is configured to regulate blown air.

### Background Art

Heretofore, thin platy sliding doors used for an air conditioning device for a vehicle have sometimes caused vibration due to the lack of strength. For example, the device described in PTL 1, Japanese Patent No. 4596046, provides prevention measures against this problem.

Furthermore, patent documents US 6 351 961 B1, WO 2008/013375 A1 and JP 2009 179200 A1 disclose known air conditioning devices with a sliding door.

This invention aims to suppress vibration of a sliding door at both end parts in the traveling direction thereof . This PTL 1 discloses the device characterized by including: a case that forms an air passage therein; a sliding door that has a platy part disposed slidably in the case and is configured to open and close the air passage with the platy part; and a guide groove that has a windward-side wall part which is formed in the case at a position on the windward side of the platy part so as to extend in the traveling direction of the platy part and a leeward-side wall part which is formed in the case at a position on the leeward side of the platy part so as to face the windward-side wall part and is configured to guide the movement of the platy part with the windward-side wall part and the leeward-side wall part, characterized in that the curvature radius of the platy part in a single unit state is set larger than the curvature radius of the windward-side wall part and the curvature radius of the leeward-side wall part, in a state where the platy part is disposed in the case, an intermediate part of the platy part in the traveling direction thereof is brought into contact with the windward-side wall part and both end parts of the platy part in the traveling direction thereof are brought into contact with the leeward-side wall part to elastically deform the platy part, the sliding door has a gear mechanism that is configured to drive the platy part, the gear mechanism has a rack that is provided in the platy part so as to extend in the traveling direction of the platy part, and a portion of the platy part located outside the rack in the width direction is inserted between the windward-side wall part and the leeward-side wall part.

With this device, the intermediate part of the platy part in the traveling direction thereof is pressed against the windward-side wall part by the elastic deformation force of the platy part itself, and both end parts of the platy part in the traveling direction thereof are pressed against the leeward-side wall part by the elastic deformation force of the platy part itself. Thereby, the platy part is supported at three points of the intermediate part in the traveling direction thereof and both end parts in the traveling direction thereof, which makes it possible to suppress vibration of the platy part at both end parts in the traveling direction thereof.

### Citation List

### Patent Literature

PTL 1: Japanese Patent No. 4596046

### Summary of Invention

### Technical Problem

However, though the device in PTL 1 above is expected to be effective for suppressing vibration, it has the following problem. Specifically, when the curvature radius of the platy part of the air-mix door before assembling is set larger than the curvature radius of the windward-side wall part of the guide groove and the curvature radius of the leeward-side wall part of the guide groove, the mesh between the pinion and the rack of the gear mechanism is loose in the vicinity of both end parts of the air-mix door in its sliding direction and the pinion might run off of the rack, and thus the sliding door cannot be driven smoothly.

Similarly, when the curvature radius of the platy part of the air-mix door before assembling is set smaller than the curvature radius of the windward-side wall part of the guide groove and the curvature radius of the leeward-side wall part of the guide groove, the mesh between the pinion and the rack of the gear mechanism is loose in the vicinity of the central part of the air-mix door in its sliding direction and the pinion might run off of the rack, and thus the sliding door cannot be driven smoothly.

To deal with this, the challenge of the present invention is to provide, in an air conditioning device for a vehicle having a sliding door which is supported at three points by a windward-side wall part and a leeward-side wall part, a technique of preventing the mesh between a pinion and a rack of a gear mechanism from becoming loose and driving the sliding door smoothly.

### Solution to Problem

In order to solve the above challenge, an air conditioning device for a vehicle (1) according to a first aspect of the present invention includes:
a case (11) that has an internal space in which delivery air flows;
a platy sliding door (20) that is disposed slidably in the internal space;
a rack (24) that has multiple teeth parts protruding toward an upstream side from the sliding door and arranged in a sliding direction;
a rotary driving unit (23) that has a shaft part rotatably supported on the case at a position upstream of the sliding door and a pinion designed to rotate integrally with the shaft part and mesh with the rack; and
a guide groove (27) that has an upstream-side guide rail (22) formed in a planar shape in the case so as to extend in the sliding direction at a position upstream of the sliding door and a downstream-side guide rail (21) formed in the case so as to be opposed to the upstream-side guide rail at a position downstream of the sliding door, and that is designed to slidably support the sliding door, characterized in that
a curvature radius of the sliding door in a single unit state is different from a curvature radius of the guide groove, and
the rack is formed so that a pitch line of the multiple teeth parts with the sliding door supported by the guide groove forms a circle substantially concentric with the guide groove.

Note that the "substantially concentric circle" mentioned here denotes that a point of the aforementioned circle, irrespective of a perfect circle, an ellipse, or other curves, corresponding to the center of the curvature radius is substantially the same as that of the counterpart. In addition, with respect to the relationship between the curvature radius of the sliding door (20) in a single unit state and the curvature radius of the guide groove (27), the present invention includes both the case where the curvature radius of the sliding door in a single unit state is larger than the curvature radius of the guide groove and vice versa.

By doing so, it is possible not only to tightly support the sliding door at three points by the guide groove but also to reliably secure the mesh between the pinion and the rack from the beginning to the end while the sliding door is in sliding movement. This makes it possible to prevent the mesh between the pinion and the rack of the gear mechanism from becoming and drive the sliding door smoothly.

An air conditioning device for a vehicle (1) according to a second aspect which is not part of the present invention may be characterized by including:
a case (11) that has an internal space in which delivery air flows;
a platy sliding door (20) that is disposed slidably in the internal space;
a rack (24) that has multiple teeth parts protruding toward an upstream side from the sliding door and arranged in a sliding direction; and
a rotary driving unit (23) that has a shaft part rotatably supported on the case at a position upstream of the sliding door and a pinion designed to rotate integrally with the shaft part and mesh with the rack, characterized in that
the rack is formed so that a pitch line of the multiple teeth parts forms a circle substantially concentric with a trajectory of each part of the sliding door at the time of sliding.

This is another representation of the content which is the same as the first aspect of the present invention, and is expected to have substantially the same effect. In the second aspect which is not part of the present invention, it is also preferable to include a guide groove (27) that has an upstream-side guide rail (22) formed in a planar shape in the case so as to extend in the sliding direction at a position upstream of the sliding door and a downstream-side guide rail (21) formed in the case so as to be opposed to the upstream-side guide rail at a position downstream of the sliding door, and that is designed to slidably support the sliding door.

Further, the air conditioning device for a vehicle (1) according to the first aspect of the present invention and the second aspect which is not part of the present invention may be characterized in that a pitch line of the multiple teeth parts forms a circle substantially concentric with the downstream-side guide rail (21) when a curvature radius of the upstream-side guide rail (22) is smaller than a curvature radius of the downstream-side guide rail and a central point of an arc formed by the upstream-side guide rail is closer to the guide groove than a central point of an arc formed by the downstream-side guide rail.

When the curvature radius of the upstream-side guide rail and that of the downstream-side guide rail are different from each other and particularly the curvature radius of the upstream-side guide rail is smaller than the curvature radius of the downstream-side guide rail (the curvature radius of the downstream-side guide rail is larger than the curvature radius of the upstream-side guide rail) and when the central point of an arc formed by the upstream-side guide rail is closer to the guide rail than the central point of an arc formed by the downstream-side guide rail, the degree of elastic deformation of the sliding door changes during its movement mainly along the downstream-side guide rail that has a larger curvature radius. More specifically, the degree of elastic deformation of the sliding door during its movement is influenced also by the upstream-side guide rail that has a smaller curvature radius, but is influenced more heavily by the downstream-side guide rail that has a larger curvature radius. In addition, the pitch line of the multiple teeth parts forms a circle substantially concentric with the downstream-side guide rail, thereby preventing the mesh between the pinion and the rack of the gear mechanism from becoming loose.

Alternatively, the air conditioning device for a vehicle (1) according to the first aspect of the present invention and the second aspect of the present invention may be characterized in that a pitch line of the multiple teeth parts forms a circle substantially concentric with the upstream-side guide rail (22) when a curvature radius of the upstream-side guide rail is larger than a curvature radius of the downstream-side guide rail (21).

When the curvature radius of the upstream-side guide rail and that of the downstream-side guide rail are different from each other and particularly the curvature radius of the upstream-side guide rail is larger than the curvature radius of the downstream-side guide rail (the curvature radius of the downstream-side guide rail is smaller than the curvature radius of the upstream-side guide rail) and when the central point of an arc formed by the downstream-side guide rail is closer to the guide rail than the central point of an arc formed by the upstream-side guide rail, the degree of elastic deformation of the sliding door changes during its movement mainly along the upstream-side guide rail that has a larger curvature radius. More specifically, the degree of elastic deformation of the sliding door during its movement is influenced also by the downstream-side guide rail that has a smaller curvature radius, but is influenced more heavily by the upstream-side guide rail that has a larger curvature radius. In addition, the pitch line of the multiple teeth parts forms a circle substantially concentric with the upstream-side guide rail, thereby preventing the mesh between the pinion and the rack of the gear mechanism from becoming loose.

Meanwhile, the air conditioning device for a vehicle according to the present invention may be characterized in that the guide groove (27) is formed so as to curve with a downstream side in a direction of flow of the delivery air as an apex thereof.

By doing so, the sliding door is biased so as to be pressed against the downstream-side guide rail by the delivery air, whereby vibration can be prevented effectively. Advantageous Effects of Invention

According to the present invention, it is possible to provide, in an air conditioning device for a vehicle (1) having a sliding door which is supported at three points by a windward-side wall part and a leeward-side wall part, a technique of preventing the mesh between a pinion and a rack of a gear mechanism from becoming loose and driving the sliding door (20) smoothly.

### Brief Description of Drawings

[Fig. 1] Fig. 1 is a sectional view of the entire air conditioning device for a vehicle (1) of a first embodiment of the present invention.
[Fig. 2] Fig. 2 is a perspective view of and around a sliding door (20) of the first embodiment of the present invention.
[Figs. 3(a) to 3(d)] Figs. 3(a) to 3 (d) are explanatory views of and around the sliding door (20) of the first embodiment of the present invention.
[Fig. 4] Fig. 4 is an explanatory view of the state of mesh between a pinion and a rack in relation to the present invention.
[Figs. 5(a) to 5(d)] Figs. 5(a) to 5 (d) are explanatory views of and around an existing sliding door (20) that corresponds to the first embodiment of the present invention.
[Figs. 6(a) to 6(d)] Figs. 6(a) to 6 (d) are explanatory views of and around a sliding door (20) of a second embodiment which is not part of the present invention.
[Figs. 7 (a) to 7(d)] Figs. 7 (a) to 7 (d) are explanatory views of and around an existing sliding door (20) that corresponds to the second embodiment which is not part of the present invention.
[Fig. 8] Fig. 8 is a sectional view of and around a sliding door (20) of a third embodiment of the present invention.
[Fig. 9] Fig. 9 is a sectional view of and around a sliding door (20) of a fourth embodiment of the present invention.

### Description of Embodiments

An air conditioning device for a vehicle 1 according to a first embodiment of the present invention is described below with reference to the drawings. Note that, in the following description, a description is provided schematically within the scope needed for explanation to achieve the purpose of the present invention and is provided mainly within the scope needed to explain parts corresponding to the present invention, and parts not explained herein shall be based on the known technique.

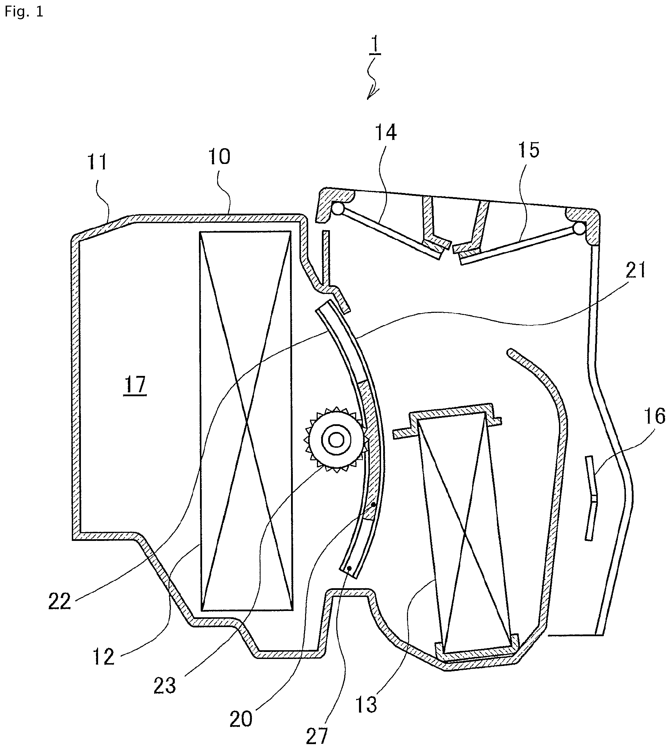

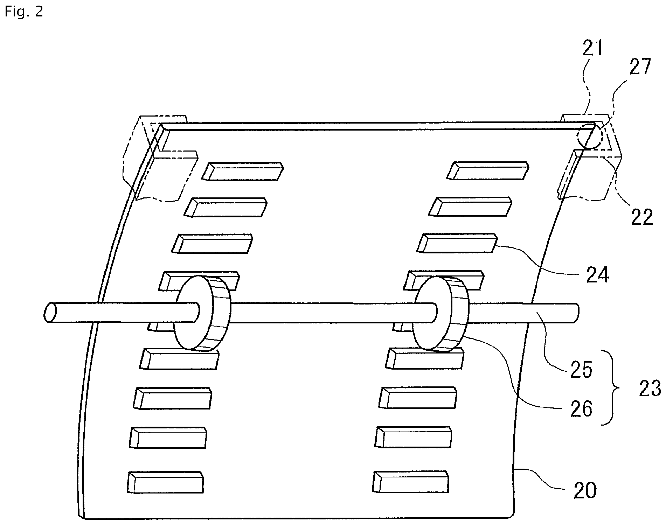

Fig. 1 is a sectional view of the entire air conditioning device for a vehicle 1 according to the first embodiment of the present invention, and Fig. 2 is a perspective view of and around a sliding door 20 of the air conditioning device for a vehicle 1 according to the first embodiment of the present invention.

The air conditioning device for a vehicle 1 is roughly constituted of: a blower unit (not illustrated) that is configured to deliver a current of air; and a temperature conditioning unit 10 that is configured to cool or heat the current of air delivered from the blower unit. The temperature conditioning unit 10 is constituted of, for example, a heat exchanger for cooling 12, a heat exchanger for heating 13, and mode doors for air temperature conditioning such as the sliding door 20, a defroster door 14, a vent door 15, and a foot door 16 that are embedded in a case 11. The current of air delivered from the blower unit passes through an air intake part 17 that is located upstream of the heat exchanger for cooling 12 and is fed to an internal space of the case 11.

The sliding door 20 is a platy door that is disposed slidably in the internal space of the case 11. This door functions to condition the air temperature and is sometimes called an air-mix door. Any sliding door will do for the sliding door 20 as long as it has certain stiffness and elasticity, and the sliding door 20 is formed of a material such as polypropylene and ABS resin.

As illustrated in Fig. 2, the sliding door 20 has a rack 24. This rack 24 has multiple teeth parts that protrude toward the upstream side from the sliding door 20 and are arranged in the sliding direction of the sliding door. The rack 24 is preferably formed integrally with the sliding door 20. This makes it possible to form the rack 24 without increasing the number of components.

The case 11 has a downstream-side guide rail 21 that is designed to support the sliding door 20 from the downstream side of the airflow. The downstream-side guide rail 21 has a sectional shape curved to be convex in the direction of airflow, and is formed in a planar shape in the case 11 so as to extend in the movement direction (sliding direction) of the sliding door 20. The downstream-side guide rail 21 is formed integrally with the case 11 or, alternatively, is formed as a separate unit and disposed inside the case 11.

The case 11 has an upstream-side guide rail 22 that is designed to support the sliding door 20 from the upstream side of the airflow. The upstream-side guide rail 22 has a sectional shape curved to be convex in the direction of airflow, and is formed in a planar shape in the case 11 so as to extend in the sliding direction. The upstream-side guide rail 22 is formed integrally with the case 11 or, alternatively, is formed as a separate unit and disposed inside the case 11.

A guide groove 27 formed of these downstream-side guide rail 21 and upstream-side guide rail 22 is designed to support the sliding door 20 slidably.

A rotary driving unit 23 is a driving source that is configured to slide the sliding door 20, and is a component that is configured to transmit, to the sliding door 20, a rotary driving force generated by an actuator (not illustrated) mounted on an outer wall face of the case 11. In addition, the rotary driving unit 23 is designed to mesh with the rack 24, and has: a shaft part 25 that is rotatably supported on the case 11 at a position upstream of the sliding door 20; and pinions 26 that are designed to rotate integrally with the shaft part 25. Teeth parts formed in the pinions 26 mesh with the rack 24.

Note that the shaft part 25 and the pinions 26 may be made of separate members or, alternatively, may be made integrally.

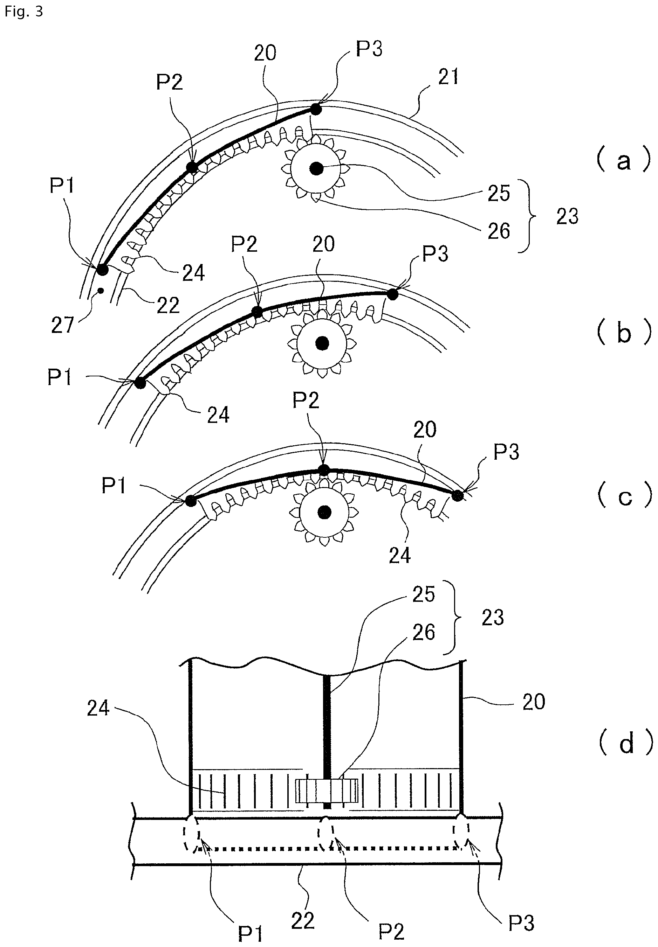

Figs. 3(a) to 3(d) are views of and around the sliding door 20 of the air conditioning device for a vehicle 1 according to the first embodiment of the present invention, including sectional views (Figs. 3(a), 3(b), and 3(c)) taken along a plane in parallel with the direction of airflow and a plan view (Fig. 3(d)) seen from the airflow direction. The curvature radius of the sliding door 20 in a single unit state is larger than the curvature radius of the upstream-side guide rail 22 and the curvature radius of the downstream-side guide rail 21. In the assembled state illustrated in Fig. 3(c), the sliding door 20 is elastically deformed and supported at three points in such a way that end parts P1 and P3 of the sliding door 20 are brought into contact with the downstream-side guide rail 21 and a central part P2 of the sliding door is brought into contact with the upstream-side guide rail 22.

Here, the rack 24 is formed so that the pitch line of its teeth parts forms a circle substantially concentric with the guide groove 27. The term "substantially" mentioned here denotes that, while the curvature radius of the guide groove 27 is almost the average of the curvature radius of the upstream-side guide rail 22 and the curvature radius of the downstream-side guide rail 21, the rack 24 is sufficient if the pitch line of its teeth parts falls between the curvature radius of the upstream-side guide rail 22 and the curvature radius of the downstream-side guide rail 21.

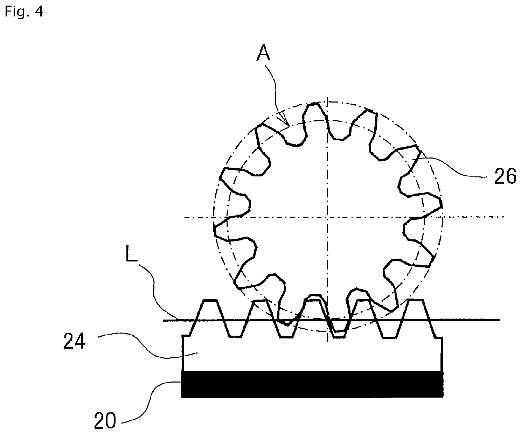

Fig. 4 is an explanatory view of the state of mesh between each pinion 26 and the rack 24 in relation to the present invention. A pitch line L of the teeth parts of the rack 24 is a reference line for the rack to be fitted to a reference circle A of the pinion 26. When the rack 24 slides, the mesh between the pinion 26 and the rack 24 is kept good if there is no change in the distance from the center of the pinion 26 to the pitch line L of the teeth parts of the rack 24.

Note that, although the rack 24 is represented as linear in Fig. 4, the same applies to a case where the rack has a shape having a curvature such as an arc.

In the case of the first embodiment of the present invention, the conditions for keeping good mesh described above are met since the rack 24 is formed so that the pitch line of its teeth parts forms a circle substantially concentric with the guide groove 27 and the sliding door 20 slides on a circle substantially concentric with the guide groove 27.

Note that, this configuration can also be represented that the rack 24 is formed so that the pitch line of its teeth parts forms a circle substantially concentric with the trajectory of each part of the sliding door 20 at the time of sliding.

A description is given of the operation of the air conditioning device for a vehicle 1 according to the first embodiment of the present invention having the above configuration.

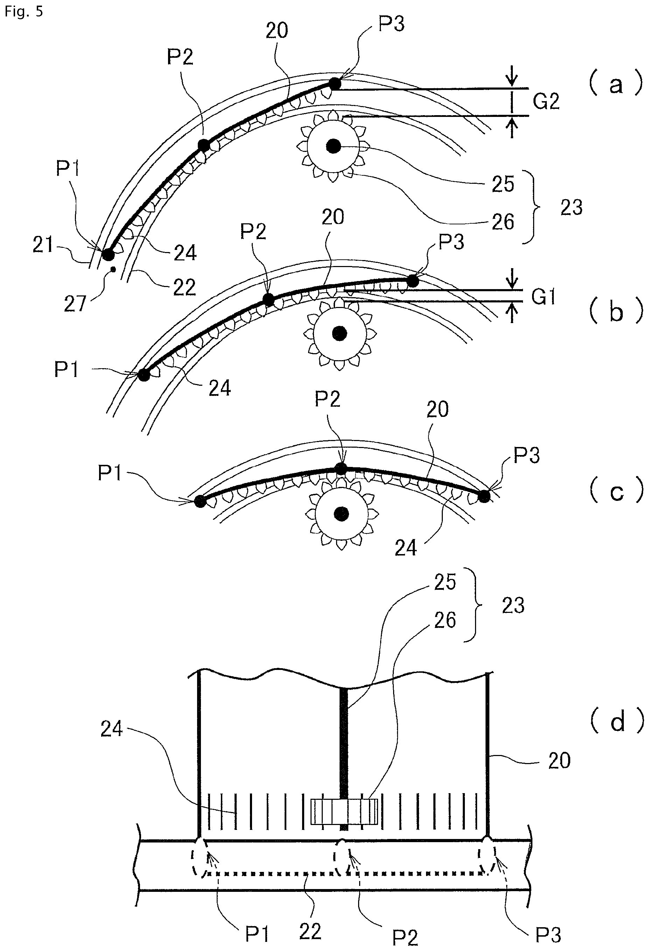

Figs. 5(a) to 5(d) are views of and around the sliding door 20 of an existing air conditioning device for a vehicle that corresponds to the first embodiment of the present invention, including sectional views (Figs. 5(a), 5(b), and 5(c)) taken along a plane in parallel with the direction of airflow and a plan view (Fig. 5(d)) seen from the airflow direction. This air conditioning device is the same as that of the first embodiment of the present invention in that the curvature radius of the sliding door 20 in a single unit state is larger than the curvature radius of the upstream-side guide rail 22 and the curvature radius of the downstream-side guide rail 21 and that, in the assembled state, as illustrated, the sliding door 20 is elastically deformed and supported at three points in such a way that the end parts P1 and P3 of the sliding door 20 are brought into contact with the downstream-side guide rail 21 and the central part P2 of the sliding door is brought into contact with the upstream-side guide rail 22.

Here, since all the teeth parts of the rack 24 stand at substantially uniform height from a proximal part of the sliding door 20, the curvature radius of the pitch line of the teeth parts of the rack 24 is almost the same as that of the sliding door 20 itself in the assembled state.

When the pinion 26 is driven to rotate to slide the sliding door 20 by way of the rack 24 in such a state (dimensional relationship), the mesh between the pinion and the rack becomes looser, which makes it difficult to drive the sliding door smoothly. Specifically, while the sliding door 20 has a curvature radius larger than the guide groove 27, the sliding door slides by being guided by the guide groove 27 having a smaller curvature radius. Thus, at the central part (P2) of the sliding door 20 illustrated in Fig. 5(c), sufficiently tight mesh between the pinion 26 and the rack 24 is achieved; however, as the sliding door 20 slides gradually as illustrated in Fig. 5(b), a gap G1 between the pitch line of the pinion 26 and that of the rack 24 increases and the mesh between them becomes looser.

In addition, when the sliding door 20 moves to the end of its moving range as illustrated in Fig. 5(a), a gap G2 between the pitch line of the pinion 26 and that of the rack 24 at the end part (P3) of the sliding door 20 further increases and the pinion might be no longer able to mesh with the rack, and thus the sliding door cannot slide smoothly.

Note that, even when the sliding door 20 slides in the reverse direction, sufficiently tight mesh between the pinion and the rack at the end part (P1) might be no longer available as in the operation described previously.

On the other hand, consider a case where the pinion 26 is driven to rotate to slide the sliding door 20 by way of the rack 24 in the configuration of the first embodiment of the present invention as illustrated in Figs. 3(a) to 3(d). In this case, while the sliding door 20 has a curvature radius larger than the guide groove 27, the pitch line of the rack 24 has substantially the same curvature radius as the guide groove 27; thus, during the sliding movement, appropriately tight mesh between the pinion and the rack is kept not only during sliding at the central part of the sliding door 20 (near P2) illustrated in Fig. 3(c) but also during sliding to the end part of the sliding door 20 (near P3) as illustrated in Fig. 3(b) and Fig. 3(a), whereby the sliding door can slide smoothly.

Note that, even when the sliding door 20 slides in the reverse direction, sufficiently tight mesh between the pinion and the rack at the end part (near P1) is kept as in the operation described previously.

Next, an air conditioning device for a vehicle 1 according to a second embodiment which is not part of the present invention is described with reference to the drawings.

The entire configuration of the air conditioning device for a vehicle illustrated in Fig. 1 and the perspective view of and around the sliding door 20 illustrated in Fig. 2 are the same as those of the first embodiment and are thus not described herein.

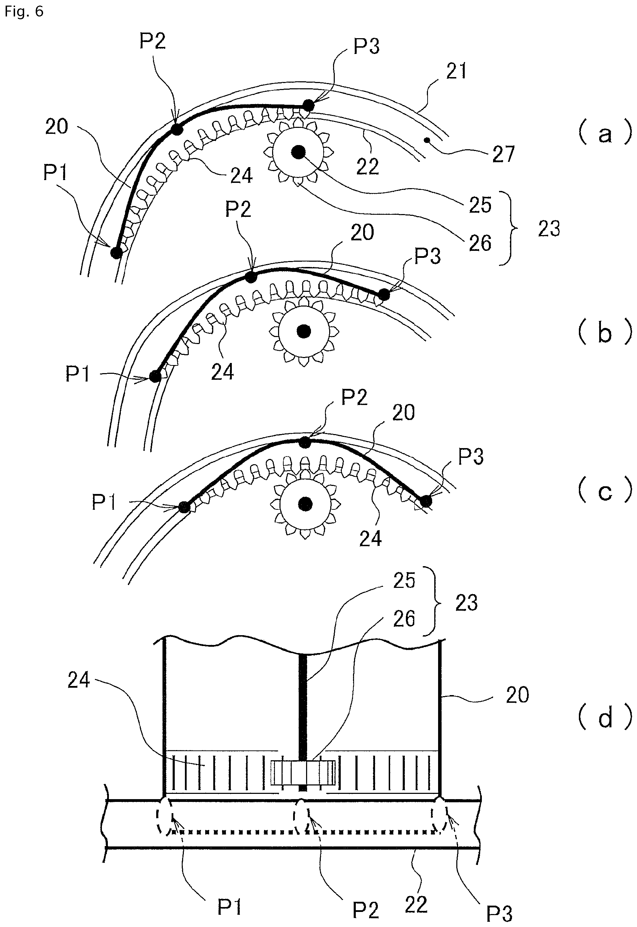

Figs. 6(a) to 6(d) are views of and around the sliding door 20 of the air conditioning device for a vehicle 1 according to the second embodiment which is not part of the present invention, including sectional views (Figs. 6(a), 6(b), and6(c)) taken along a plane in parallel with the direction of airflow and a plan view (Fig. 6(d)) seen from the airflow direction. The curvature radius of the sliding door 20 in a single unit state is smaller than the curvature radius of the upstream-side guide rail 22 and the curvature radius of the downstream-side guide rail 21. In the assembled state illustrated in Fig. 6(c), the sliding door 20 is elastically deformed and supported at three points in such a way that the end parts P1 and P3 of the sliding door 20 are brought into contact with the upstream-side guide rail 22 and the central part P2 of the sliding door is brought into contact with the downstream-side guide rail 21.

Here, the rack 24 is formed so that the pitch line of its teeth parts forms a circle substantially concentric with the guide groove 27. The term "substantially" mentioned here denotes that, while the curvature radius of the guide groove 27 is almost the average of the curvature radius of the upstream-side guide rail 22 and the curvature radius of the downstream-side guide rail 21, the rack 24 is sufficient if the pitch line of its teeth parts falls between the curvature radius of the upstream-side guide rail 22 and the curvature radius of the downstream-side guide rail 21.

In the case of the second embodiment which is not part of the present invention, the conditions for keeping good mesh described above are met since the rack 24 is formed so that the pitch line of its teeth parts forms a circle substantially concentric with the guide groove 27 and the sliding door 20 slides on a circle substantially concentric with the guide groove 27.

Note that, this configuration can also be represented that the rack 24 is formed so that the pitch line of its teeth parts forms a circle substantially concentric with the trajectory of each part of the sliding door 20 at the time of sliding.

A description is given of the operation of the air conditioning device for a vehicle 1 according to the second embodiment which is not part of the present invention having the above configuration.

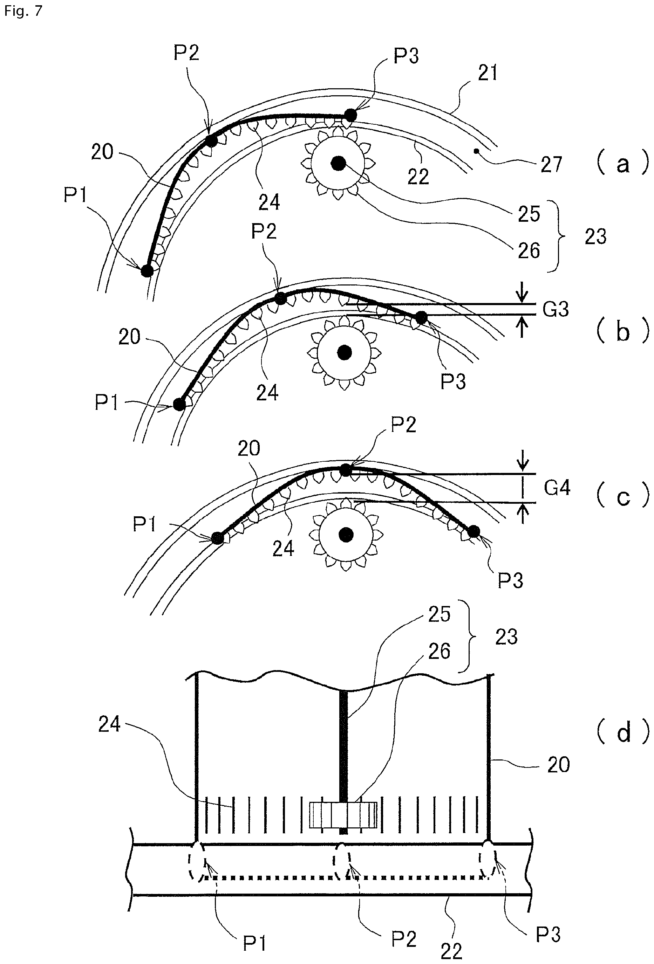

Figs. 7(a) to 7(d) are views of and around the sliding door 20 of an existing air conditioning device for a vehicle that corresponds to the second embodiment which is not part of the present invention, including sectional views (Figs. 7(a), 7(b), and 7(c)) taken along a plane in parallel with the direction of airflow and a plan view (Fig. 7(d)) seen from the airflow direction. This air conditioning device is the same as that of the second embodiment which is not part of the present invention in that the curvature radius of the sliding door 20 in a single unit state is smaller than the curvature radius of the upstream-side guide rail 22 and the curvature radius of the downstream-side guide rail 21 and that, in the assembled state, as illustrated, the sliding door 20 is elastically deformed and supported at three points in such a way that the end parts P1 and P3 of the sliding door 20 are brought into contact with the upstream-side guide rail 22 and the central part P2 of the sliding door is brought into contact with the downstream-side guide rail 21.

Here, since all the teeth parts of the rack 24 stand at substantially uniform height from the proximal part of the sliding door 20, the curvature radius of the pitch line of the teeth parts of the rack 24 is almost the same as that of the sliding door 20 itself in the assembled state.

When the pinion 26 is driven to rotate to slide the sliding door 20 by way of the rack 24 in such a state (dimensional relationship), the mesh between the pinion and the rack becomes looser, which makes it difficult to drive the sliding door smoothly. Specifically, while the sliding door 20 has a curvature radius smaller than that of the guide groove 27, the sliding door slides by being guided by the guide groove 27 having a larger curvature radius. Thus, at the end part (P3) of the sliding door 20 illustrated in Fig. 7 (a), sufficiently tight mesh between the pinion 26 and the rack 24 is achieved; however, as the sliding door 20 slides gradually as illustrated in Fig. 7(b), a gap G3 between the pitch line of the pinion 26 and that of the rack 24 increases and the mesh between them becomes looser.

In addition, when the sliding door 20 moves to the end of its moving range as illustrated in Fig. 7(c), a gap G4 between the pitch line of the pinion 26 and that of the rack 24 at the central part (P2) of the sliding door 20 further increases and the pinion might be no longer able to mesh with the rack, and thus the sliding door cannot slide smoothly.

Note that, even when the sliding door 20 slides in the reverse direction, sufficiently tight mesh between the pinion and the rack is available at the end part (P1) but might be no longer available at the central part (P2) as in the operation described previously.

On the other hand, consider a case where the pinion 26 is driven to rotate to slide the sliding door 20 by way of the rack 24 in the configuration of the second embodiment which is not part of the present invention as illustrated in Figs. 6(a) to 6(d). In this case, while the sliding door 20 has a curvature radius smaller than that of the guide groove 27, the pitch line of the rack 24 has substantially the same curvature radius as the guide groove 27; thus, during the sliding movement, appropriately tight mesh between the pinion and the rack is kept not only during sliding at the end part of the sliding door 20 (near P3) illustrated in Fig. 6(a) but also during sliding to the central part of the sliding door 20 (near P1) as illustrated in Fig. 6(b) and Fig. 6(a), whereby the sliding door can slide smoothly.

Note that, even when the sliding door 20 slides in the reverse direction, sufficiently tight mesh between the pinion and the rack is kept from the end part (near P1) to the central part (near P2) as in the operation described previously.

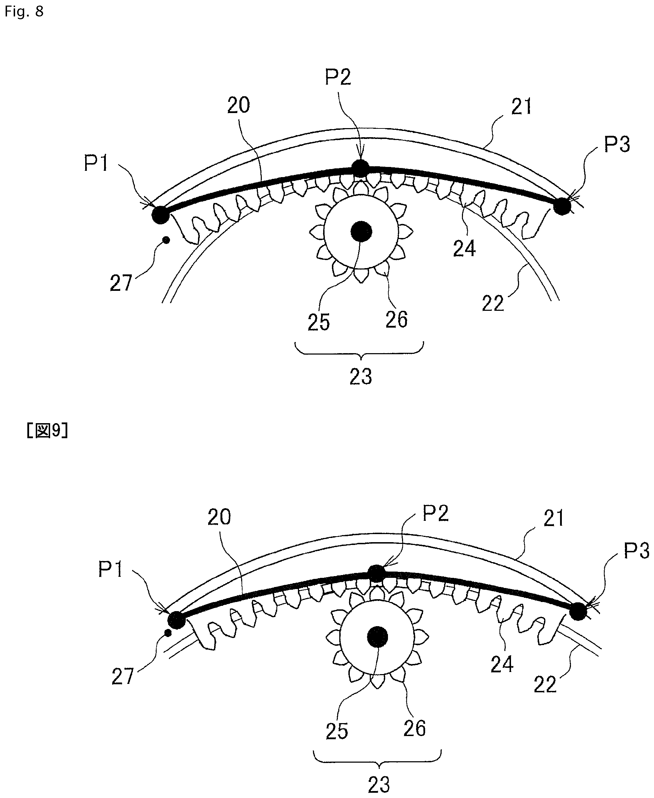

Next, an air conditioning device for a vehicle according to a third embodiment of the present invention is described. Fig. 8 is a sectional view of and around the sliding door 20 of the air conditioning device for a vehicle according to the third embodiment of the present invention.

Here, this embodiment is different from the prior embodiments in that the curvature radius of the upstream-side guide rail 22 is smaller than that of the downstream-side guide rail, that the central point of an arc formed by the upstream-side guide rail is closer to the guide groove than the central point of an arc formed by the downstream-side guide rail (not illustrated), and that the pitch line of the teeth parts is formed so as to form a circle substantially concentric with the downstream-side guide rail 21.

By doing so, since the curvature radius of the upstream-side guide rail 22 and that of the downstream-side guide rail 21 are different from each other and particularly the curvature radius of the downstream-side guide rail 21 is larger, the degree of elastic deformation of the sliding door changes during its movement mainly along the downstream-side guide rail 21 that has a larger curvature radius. Here, since the pitch circle of the teeth parts is substantially concentric with the downstream-side guide rail 21, the mesh between the pinion and the rack is kept appropriately.

Next, an air conditioning device for a vehicle 1 according to a fourth embodiment of the present invention is described. Fig. 9 is a sectional view of and around the sliding door 20 of the air conditioning device for a vehicle 1 according to the fourth embodiment of the present invention.

Here, this embodiment is different from the prior embodiments in that the curvature radius of the downstream-side guide rail 21 is smaller than that of the upstream-side guide rail, that the central point of an arc formed by the downstream-side guide rail is closer to the guide groove than the central point of an arc formed by the upstream-side guide rail (not illustrated), and that the pitch line of the teeth parts is formed so as to form a circle substantially concentric with the upstream-side guide rail 22.

By doing so, since the curvature radius of the upstream-side guide rail 22 and that of the downstream-side guide rail 21 are different from each other and particularly the curvature radius of the upstream-side guide rail 22 is larger, the degree of elastic deformation of the sliding door changes during its movement mainly along the upstream-side guide rail 22 that has a larger curvature radius. Here, since the pitch circle of the teeth parts is substantially concentric with the upstream-side guide rail 22, the mesh between the pinion and the rack is kept appropriately.

Note that, throughout the foregoing description, the air conditioning device for a vehicle 1 according to the present invention is formed so that the guide groove 27 curves with the downstream side in the direction of the flow of delivery air as its apex.

By doing so, the sliding door 20 is biased so as to be pressed against the downstream-side guide rail 21 by the delivery air, whereby vibration can be prevented effectively.

In addition, although the sliding door 20 is described as a door for conditioning the air temperature of the air conditioning device for a vehicle 1 throughout the foregoing description, the present invention is also applicable to various doors of the air conditioning device for a vehicle 1 other than this door (such as an intake door and a blowout mode door) .

### Industrial Applicability

The air conditioning device for a vehicle according to the present invention can be industrially manufactured and can be a target of business transaction, so that this invention has an economic value and industrially applicable.

### Reference Signs List

1: air conditioning device for vehicle, 10: temperature conditioning unit, 11: case, 12: heat exchanger for cooling, 13: heat exchanger for heating, 14: defroster door, 15: vent door, 16: foot door, 17: air intake part, 20: sliding door, 21: downstream-side guide rail, 22: upstream-side guide rail, 23: rotary driving unit, 24: rack, 25: shaft part, 26: pinion, 27: guide groove, A: pitch circle of pinion, L: pitch line of rack.

## Claims

1. An air conditioning device for a vehicle (1) comprising:
a case (11) that has an internal space in which delivery air flows;
a platy sliding door (20) that is disposed slidably in the internal space;
a rack (24) that has a plurality of teeth parts protruding toward an upstream side from the sliding door and arranged in a sliding direction;
a rotary driving unit (23) that has a shaft part (25) rotatably supported on the case at a position upstream of the sliding door and a pinion (26) designed to rotate integrally with the shaft part and mesh with the rack; and
a guide groove (27) that has an upstream-side guide rail (22) formed in a planar shape in the case so as to extend in the sliding direction at a position upstream of the sliding door and a downstream-side guide rail (21) formed in the case so as to be opposed to the upstream-side guide rail at a position downstream of the sliding door, and that is designed to slidably support the sliding door, **characterized in that**
a curvature radius of the sliding door in a single unit state is different from a curvature radius of the guide groove, and
the rack is formed so that a pitch line of the plurality of teeth parts with the sliding door supported by the guide groove forms a circle substantially concentric with the guide groove.

2. The air conditioning device for a vehicle (1) according to claim 1, wherein
the air conditioning device further comprises a guide groove (27) that has an upstream-side guide rail (22) formed in a planar shape in the case so as to extend in the sliding direction at a position upstream of the sliding door and a downstream-side guide rail (21) formed in the case so as to be opposed to the upstream-side guide rail at a position downstream of the sliding door, and that is designed to slidably support the sliding door, and
a pitch line of the plurality of teeth parts forms a circle substantially concentric with the downstream-side guide rail (21) when a curvature radius of the upstream-side guide rail (22) is smaller than a curvature radius of the downstream-side guide rail and a central point of an arc formed by the upstream-side guide rail is closer to the guide groove than a central point of an arc formed by the downstream-side guide rail.

3. The air conditioning device for a vehicle (1) according to claim 1, wherein
the air conditioning device further comprises a guide groove (27) that has an upstream-side guide rail (22) formed in a planar shape in the case so as to extend in the sliding direction at a position upstream of the sliding door and a downstream-side guide rail (21) formed in the case so as to be opposed to the upstream-side guide rail at a position downstream of the sliding door, and that is designed to slidably support the sliding door, and
a pitch line of the plurality of teeth parts forms a circle substantially concentric with the upstream-side guide rail (22) when a curvature radius of the upstream-side guide rail is larger than a curvature radius of the downstream-side guide rail (21) and a central point of an arc formed by the downstream-side guide rail is closer to the guide groove than a central point of an arc formed by the upstream-side guide rail.

4. The air conditioning device for a vehicle (1) according to any one of claims 1 to 3, wherein the guide groove (27) is formed so as to curve with a downstream side in a direction of flow of the delivery air as an apex thereof.

## Patentansprüche

1. Klimatisierungsvorrichtung für ein Fahrzeug (1), Folgendes umfassend:
ein Gehäuse (11), das einen Innenraum aufweist, in dem Zuluft strömt;
eine plattenförmige Schiebetür (20), die verschiebbar im Innenraum angeordnet ist;
eine Zahnstange (24), die mehrere Zahnteile aufweist, die zu einer vorgelagerten Seite von der Schiebetür vorstehen und in eine Schieberichtung angeordnet sind;
eine Drehantriebseinheit (23), die einen Wellenteil (25) aufweist, der in einer der Schiebetür vorgelagerten Position auf dem Gehäuse drehbar gelagert ist, und ein Ritzel (26), das dazu ausgestaltet ist, sich mit dem Wellenteil integral zu drehen und in die Zahnstange einzugreifen; und
eine Führungsnut (27), die eine Führungsschiene (22) auf der vorgelagerten Seite, die in einer planen Form im Gehäuse ausgebildet ist, um sich in einer der Schiebetür vorgelagerten Position in die Schieberichtung zu erstrecken, und eine Führungsschiene (21) auf der nachgelagerten Seite, die im Gehäuse ausgebildet ist, um der Führungsschiene auf der vorgelagerten Seite in einer der Schiebetür nachgelagerten Position entgegengesetzt zu sein, aufweist und die dazu ausgestaltet ist, die Schiebetür verschiebbar zu lagern, **dadurch gekennzeichnet, dass**
sich der Krümmungsradius der Schiebetür im Einzeleinheitszustand vom Krümmungsradius der Führungsnut unterscheidet und
die Zahnstange derart ausgebildet ist, dass eine Teilungslinie der mehreren Zahnteile, wenn die Schiebetür von der Führungsnut gelagert wird, einen Kreis ausbildet, der im Wesentlichen konzentrisch zur Führungsnut ist.

2. Klimatisierungsvorrichtung für ein Fahrzeug (1) nach Anspruch 1, wobei
die Klimatisierungsvorrichtung ferner eine Führungsnut (27) umfasst, die eine Führungsschiene (22) auf der vorgelagerten Seite, die in einer planen Form im Gehäuse ausgebildet ist, um sich in einer der Schiebetür vorgelagerten Position in die Schieberichtung zu erstrecken, und eine Führungsschiene (21) auf der nachgelagerten Seite, die im Gehäuse ausgebildet ist, um der Führungsschiene auf der vorgelagerten Seite in einer der Schiebetür nachgelagerten Position entgegengesetzt zu sein, aufweist und die dazu ausgestaltet ist, die Schiebetür verschiebbar zu lagern, und
eine Teilungslinie der mehreren Zahnteile einen Kreis ausbildet, der im Wesentlichen konzentrisch zur Führungsschiene (21) auf der nachgelagerten Seite ist, wenn der Krümmungsradius der Führungsschiene (22) auf der vorgelagerten Seite kleiner ist als der Krümmungsradius der Führungsschiene auf der nachgelagerten Seite und ein Mittelpunkt eines durch die Führungsschiene auf der vorgelagerten Seite ausgebildeten Kreisbogens näher an der Führungsnut liegt als ein Mittelpunkt eines durch die Führungsschiene auf der nachgelagerten Seite ausgebildeten Kreisbogens.

3. Klimatisierungsvorrichtung für ein Fahrzeug (1) nach Anspruch 1, wobei
die Klimatisierungsvorrichtung ferner eine Führungsnut (27) umfasst, die eine Führungsschiene (22) auf der vorgelagerten Seite, die in einer planen Form im Gehäuse ausgebildet ist, um sich in einer der Schiebetür vorgelagerten Position in die Schieberichtung zu erstrecken, und eine Führungsschiene (21) auf der nachgelagerten Seite, die im Gehäuse ausgebildet ist, um der Führungsschiene auf der vorgelagerten Seite in einer der Schiebetür nachgelagerten Position entgegengesetzt zu sein, aufweist und die dazu ausgestaltet ist, die Schiebetür verschiebbar zu lagern, und
eine Teilungslinie der mehreren Zahnteile einen Kreis ausbildet, der im Wesentlichen konzentrisch zur Führungsschiene (22) auf der vorgelagerten Seite ist, wenn der Krümmungsradius der Führungsschiene auf der vorgelagerten Seite größer ist als der Krümmungsradius der Führungsschiene (21) auf der nachgelagerten Seite und ein Mittelpunkt eines durch die Führungsschiene auf der nachgelagerten Seite ausgebildeten Kreisbogens näher an der Führungsnut liegt als ein Mittelpunkt eines durch die Führungsschiene auf der vorgelagerten Seite ausgebildeten Kreisbogens.

4. Klimatisierungsvorrichtung für ein Fahrzeug (1) nach einem der Ansprüche 1 bis 3, wobei die Führungsnut (27) ausgebildet ist, um sich mit einer nachgelagerten Seite in eine Strömungsrichtung der Zuluft als deren Scheitel zu krümmen.

## Revendications

1. Dispositif de climatisation pour un véhicule (1) comprenant :
un boîtier (11) qui a un espace interne dans lequel s'écoule de l'air soufflé ;
une porte coulissante lamellaire (20) qui est disposée de façon coulissante dans l'espace interne ;
un râtelier (24) qui a une pluralité de parties de dents faisant saillie vers un côté amont à partir de la porte coulissante et agencées dans une direction de coulissement ;
une unité d'entraînement rotative (23) qui a une partie d'arbre (25) supportée de façon rotative sur le boîtier au niveau d'une position en amont de la porte coulissante et un pignon (26) conçu pour tourner d'un seul tenant avec la partie d'arbre et s'engrener avec le râtelier ; et
une rainure de guidage (27) qui a un rail de guidage côté amont (22) formé en un profil planaire dans le boîtier de façon à s'étendre dans la direction de coulissement au niveau d'une position en amont de la porte coulissante et un rail de guidage côté aval (21) formé dans le boîtier de façon à être opposé au rail de guidage côté amont au niveau d'une position en aval de la porte coulissante, et qui est conçu pour supporter de façon coulissante la porte coulissante, **caractérisé en ce que**
un rayon de courbure de la porte coulissante dans un état en une seule unité est différent d'un rayon de courbure de la rainure de guidage, et
le râtelier est formé de sorte qu'une ligne de pas de la pluralité de parties de dents avec la porte coulissante supportée par la rainure de guidage forme un cercle substantiellement concentrique avec la rainure de guidage.

2. Dispositif de climatisation pour un véhicule (1) selon la revendication 1,
le dispositif de climatisation comprenant en outre une rainure de guidage (27) qui a un rail de guidage côté amont (22) formé en un profil planaire dans le boîtier de façon à s'étendre dans la direction de coulissement au niveau d'une position en amont de la porte coulissante et un rail de guidage côté aval (21) formé dans le boîtier de façon à être opposé au rail de guidage côté amont au niveau d'une position en aval de la porte coulissante, et qui est conçu pour supporter de façon coulissante la porte coulissante, et
une ligne de pas de la pluralité de parties de dents formant un cercle substantiellement concentrique avec le rail de guidage côté aval (21) lorsqu'un rayon de courbure du rail de guidage côté amont (22) est inférieur à un rayon de courbure du rail de guidage côté aval et qu'un point central d'un arc formé par le rail de guidage côté amont est plus proche de la rainure de guidage qu'un point central d'un arc formé par le rail de guidage côté aval.

3. Dispositif de climatisation pour un véhicule (1) selon la revendication 1,
le dispositif de climatisation comprenant en outre une rainure de guidage (27) qui a un rail de guidage côté amont (22) formé en un profil planaire dans le boîtier de façon à s'étendre dans la direction de coulissement au niveau d'une position en amont de la porte coulissante et un rail de guidage côté aval (21) formé dans le boîtier de façon à être opposé au rail de guidage côté amont au niveau d'une position en aval de la porte coulissante, et qui est conçu pour supporter de façon coulissante la porte coulissante, et
une ligne de pas de la pluralité de parties de dents formant un cercle substantiellement concentrique avec le rail de guidage côté amont (22) lorsqu'un rayon de courbure du rail de guidage côté amont est supérieur à un rayon de courbure du rail de guidage côté aval (21) et qu'un point central d'un arc formé par le rail de guidage côté aval est plus proche de la rainure de guidage qu'un point central d'un arc formé par le rail de guidage côté amont.

4. Dispositif de climatisation pour un véhicule (1) selon l'une quelconque des revendications 1 à 3, dans lequel la rainure de guidage (27) est formée de façon à s'incurver avec un côté aval dans une direction d'écoulement de l'air soufflé en tant que sommet de celui-ci.
